# EUROPEAN PATENT APPLICATION

(11) **EP 3 214 381 A1**
(43) Date of publication of application: **06.09.2017**
(21) Application number: 17157747.1
(22) Date of filing: 24.02.2017
(51) Int. Cl.: F24F 7/08, E06B 7/02, E06B 7/10, F24F 12/00, F24F 13/06

(54) **VENTILATION DEVICE AND VENTILATION METHOD**

(30) Priority: 03.03.2016 FI 20165178
(71) Applicant: Skaala Production Oy, 62375 Ylihärmä (FI)
(72) Inventor: Hänninen, Petri, 60510 Hyllykallio (FI)
(74) Representative: Genip Oy

(57) **Abstract**

In order to reduce the sensation of draught and in order to reduce the frosting of the outer cladding of the building, in the invented ventilation device (100):
i) a fresh air duct (65, 62A, 68) comprises a jet flow duct (68) for converting the air flow travelling in the fresh air duct (65, 62A, 68) into a jet flow, the discharge direction of which jet flow duct (68) has been tilted upwards from the horizontal level;
and
ii) the exhaust air duct (66, 62B, 69) comprises a jet flow duct (69) for converting the air flow travelling in the exhaust air duct (66, 62B, 69) into a jet flow, the discharge direction of which jet flow duct (69) has been tilted downwards from the horizontal level.

Please note that here are also parallel independent claims for the ventilation window and for the methods mentioned in the title of the invention.

## Description

### Field of invention

The invention is related to the field of building technology and in particular to the implementation of mechanical ventilation.

### Technical background

Skaala Production Oy has made considerable investments in product development in order to bring to the market ventilation devices installable in a window and windows which are or can be equipped with a ventilation device.

By means of ventilation devices installable in a window and by means of windows equipped with a ventilation device, it is possible to implement room-specific or decentralised ventilation in buildings. Ventilation devices installable in a window and windows equipped with a ventilation device can either form a ventilation system in themselves or contribute jointly as part of a central ventilation system. A central ventilation system would typically also include at least centralised air exhaust through ceiling valves at least in the bathroom and toilet facilities and possibly also in the kitchen.

One advantageous characteristic of decentralised or room-specific ventilation implemented by means ventilation devices installable in a window or windows equipped with a ventilation device is that for example in residential use it is possible to bring air taken from the outside into the interior in facilities where the users spend relatively much time. When the quality of air deteriorates, ventilation can be intensified locally by increasing the volume flow of a ventilation device installable in a window or of a window equipped with a ventilation device.

Even though a heat exchanger is used in the ventilation device, it happens in cold weather - especially at sub-zero temperatures Celsius - that the air released from the fresh air duct into the room air is slightly colder that the room air. As a result of this, it is possible, at least in theory, that there is a sensation of draught in the vicinity of the ventilation device. On the other hand, in a corresponding circumstance the air ending up from the exhaust air duct to the exterior side is slightly warmer than outdoor air. As a result of this, it is possible, at least in theory, that hoar frost accumulates on the outer cladding of the building in the vicinity of the ventilation device. This is especially annoying if hoar frost accumulated on the outer surface of the outermost pane of a ventilation window. In this case, keeping the outer surface of the outermost pane free from hoar frost would be difficult also when using the applicant's protected non-frosting window that operates in the Finnish climate (described in the Finnish utility model 9444) due to the frosting caused by the moisture contained in the exhaust air flow of the ventilation device.

### Objective of invention

The objective of the first aspect of the invention is to increase housing comfort in the vicinity of the ventilation device or in the vicinity of the ventilation window equipped with the ventilation device.

The objective of the second aspect of the invention, which second aspect supplements the first aspect of the, is to reduce the frosting of the outer cladding of the building in the vicinity of the ventilation device or in the vicinity of the ventilation window equipped with the ventilation device, and especially in the case of the ventilation window equipped with the ventilation device, to reduce the frosting of the outer surface of the outermost pane.

Both objectives can be solved by means of the ventilation device according to the independent claim 1 and also by means of the ventilation window according to the parallel independent claim 9.

The objective according to the first aspect can also be solved by means of the method according to the parallel independent claim 11. The objective according to the second aspect can also be solved by means of the method according to the parallel independent claim 12.

The dependent claims describe the advantageous aspects of the ventilation device and ventilation window.

### Advantages of invention

The ventilation device comprises at least one fresh air duct which is in a flow connection between the exterior and interior and at least one exhaust air duct which is in a flow connection between the interior and exterior, which fresh air duct and exhaust air duct run through a heat exchanger. In addition to this, the ventilation device comprises air moving apparatuses - such as at least one blower - in order accomplish an air flow both through the fresh air duct and through the exhaust air duct.

In the ventilation device:
i) the fresh air duct comprises a jet flow duct for converting the air flow travelling in the fresh air duct into a jet flow, the trailing angle of the inlet air of which jet flow duct has been tilted upwards from the horizontal level;
   and
ii) the exhaust air duct comprises a jet flow duct for converting the air flow travelling in the exhaust air duct into a jet flow, the trailing angle of the waste air of which jet flow duct has been tilted downwards from the horizontal level.

A jet flow is a tubular flow, where the flow velocity is clearly greater than in the surrounding air mass. When the difference in velocity is sufficiently great, the flow remains tubular. This tubularity can be used for increasing the throw. In accordance with the basic rules of flow dynamics, the interface of a fast flow also accelerates the surrounding air, which moves more slowly, to the direction of the fast flow. This contributes to the mixing of the inlet air into the room air (or correspondingly into the outdoor air). A jet flow can be accomplished by narrowing the cross-sectional area of the flow evenly towards the discharge opening. The length of the narrowing distance of the flow is selected to be suitable in accordance with the flow velocity.

The jet flow contributes to the expansion of the circulation area of air over a larger surface area, for example in a room (especially if jet flow for example into a room space in accordance with aspect i)) even over the area of the entire room or more generally over a larger area (especially if jet flow to the exterior in accordance with aspect ii)).

In accordance with aspect i), it is possible to avoid the sensation of draught by directing the jet flow, which contains air that is colder than room air, upwards from the horizontal level. In this case, the jet flow that contains colder air takes with it warmer room air and travels upwards and at the same time father away from the ventilation device. As the warmer and colder air mix, the mixed air mass descends by means of natural convection. When the dimensions of the device are made to be suitable, it is possible to shift a circumstance, where a "sensation of draught" would be noticeable, to the ceiling of the room space, where it does not disturb housing comfort.

In accordance with aspect ii), it is possible to reduce the frosting of the outer cladding of the building by directing the jet flow, which contains air that is warmer (and in this way also moister) than outdoor air, downwards from the horizontal level. In this case, the jet flow that contains warmer air takes with it colder outdoor air and travels downwards and at the same time father away from the ventilation device. As the warmer and colder air mix, the mixed air mass rises by means of natural convection. When the dimensions of the device are made to be suitable, it is possible to shift a circumstance, where "frosting" is caused, farther away from the outer cladding of the building (and especially from the outermost pane!), in which case it is possible to at least reduce frosting, even though it would not be possible to completely prevent it for example because of wind conditions.

The ventilation device is advantageously elongated and used in the vertical position. In this case, the discharge point of the jet flow duct of the fresh air duct is most advantageously located in the upper part of the ventilation device. This enables the avoidance of the sensation of draught on the level of the lower part of the ventilation device.

Most advantageously, the trailing angle of the inlet air of the jet flow duct of the fresh air duct is between 15°-75° upwards from the horizontal level. This enables mixing taking place at a sufficient altitude near the ceiling with the most commonly encountered heights of residential rooms and with the flow velocities accomplishable with the ventilation device.

If the fresh air duct of the ventilation device comprises an elongated pre-heating duct, which runs in the flow direction from above downwards, it is possible to implement the duct structure of the ventilation device effectively from the point of view of the heat exchanger when the pre-heating duct forms in a way an extra loop, on the other hand it is also possible to prevent the mixing of the air masses, which travel in the ventilation device in different flow directions, on the outside of the ventilation device.

The ventilation device is advantageously elongated and used in the vertical position. In this case, the jet flow duct of the exhaust air duct is most advantageously located in the lower part of the ventilation device. In this case, the discharge point of the jet flow duct of the fresh air duct is most advantageously located in the upper part of the ventilation device. This enables the reduction of frosting on the level of the upper part of the ventilation device.

When the trailing angle of the waste air of the jet flow duct of the exhaust air duct is between 15°-75° downwards from the horizontal level, it is possible to avoid frosting sufficiently well in the vicinity of the outer cladding of the building (and especially in the vicinity of the outermost pane!) in the wind conditions most commonly prevailing in inland and on the other hand with the flow velocities accomplishable with the ventilation device.

The exhaust air duct advantageously comprises an elongated suction duct, which runs in the flow direction from below upwards. In this case, it is possible to implement the duct structure of the ventilation device effectively from the point of view of the heat exchanger when the suction duct forms in a way an extra loop, on the other hand it is also possible to prevent the mixing of the air masses, which travel in the ventilation device in different flow directions, on the outside of the ventilation device.

The heat exchanger is most advantageously a counter flow heat exchanger.

The ventilation window according to the invention comprises a frame and at least one sash, which determines the light opening area, at least one pane fastened to the sash, as well as the ventilation device according to the invention, installed in the vertical frame, enables the advantages in accordance with aspect i) and aspect ii).

When in the ventilation window:
i) the discharge point of the jet flow duct of the fresh air duct is in the upper part of the ventilation window;
   and
ii) the discharge point of the jet flow duct of the exhaust air duct is in the lower part of the ventilation window,
in the situation in accordance with item i) it is possible to reduce the sensation of draught in front of the window (for example at the weary shoulders of a family father resting on a sofa), and
in the situation in accordance with item ii) it is possible to reduce the frosting of the outermost window surface, even though it would not be possible to completely prevent frosting for example because of wind conditions. In this case, the gaze of the family mother sitting in an armchair opposite to the family father resting on the sofa would possibly also see things other than a frosted window pane.

In the method for the reduction of the sensation of draught, the inlet air of the air flow in the vicinity of the ventilation device - which can especially be installed in the ventilation window - run from the exterior side into the interior through a heat exchanger - which is most preferably a counter flow heat exchanger - is run into the interior as a jet flow so that the trailing angle of the inlet air has been tilted upwards from the horizontal level.

In the method for the reduction of the frosting of the outermost pane of the ventilation window that comprises the ventilation device, the waste air of the air flow run from the interior side to the exterior through a heat exchanger - which is most preferably a counter flow heat exchanger - is run to the exterior as a jet flow so that the trailing angle of the waste air has been tilted downwards from the horizontal level.

Both methods can be implemented especially suitably with the ventilation device and ventilation window presented in the application.

### List of drawings

In what follows, the ventilation device and ventilation window are presented in more detail by means of the exemplary embodiments shown in the enclosed drawings FIG 1 - FIG 11. Of the drawings:
- FIG 1: shows the ventilation device installed in the ventilation window, viewed in a perspective from the right front side, from the interior side;
- FIG 2: shows the ventilation device installed in the ventilation window, viewed in a perspective from the left rear side, from the exterior side;
- FIG 3: shows the duct structure of the ventilation device with the casing removed, from the first direction;
- FIG 4: shows the duct structure of the ventilation device (especially the fresh air duct of the counter flow heat exchanger and the exhaust duct of the counter flow heat exchanger) with the casing removed, from the second direction;
- FIG 5 and 9: show the structure of the ventilation device with the cover of the casing removed, viewed in a perspective from two directions;
- FIG 6: shows the cross section of the ventilation device at location VI-VI (cf. FIG 5);
- FIG 7: shows detail VII of the cross section VI-VI of the ventilation device when the cover of the casing is in place;
- FIG 8: shows the electric system of the ventilation device;
- FIG 10: shows the casing of the ventilation device when the internal structure of the ventilation device has been removed; and
- FIG 11: shows a cross section of the ventilation device at the inlet of the exhaust air duct.

The same reference numbers refer to the same technical characteristics in all drawings.

### Detailed description

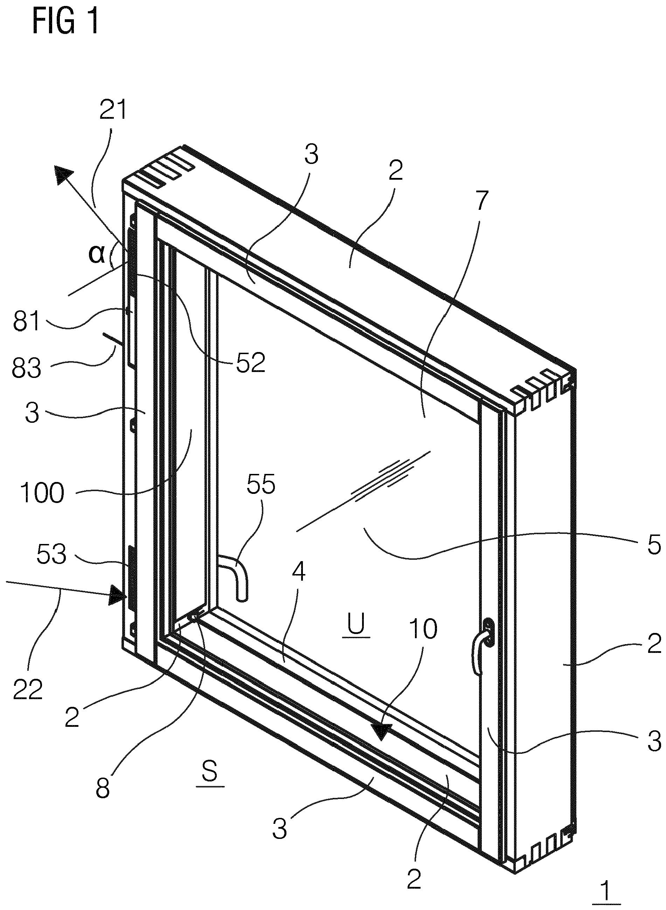

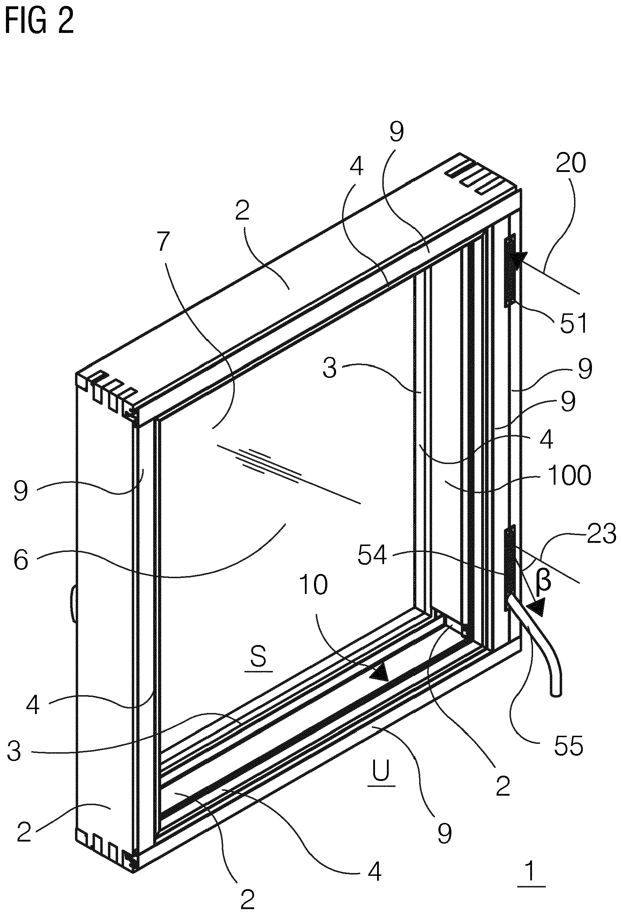

FIG 1 and 2 show a ventilation device 100 installed in a ventilation window 1, viewed in a perspective from the right front side, from the interior S side (FIG 1), and from the left front side, from the exterior U side (FIG 2).

The ventilation window 1 comprises a frame 2. In addition to this, the ventilation window 1 comprises an outer sash 4 arranged in connection with the frame 2, to which outer sash 4 at least one pane 6 has been fastened, and an inner sash 3 arranged in connection with the frame 2, to which inner sash 3 at least one pane 5 has been fastened. The ventilation window 1 can have frame lining 9 to cover the frame 2 and the outer sash 4 from the exterior U side.

The outer sash 4 and the inner sash 3 have been fastened to the frame 2 or one of the sashes 3, 4 has been fastened to the frame 2 and the other sash 3, 4 has been fastened to a sash fastened to the frame 2.

In this way, an intermediate space 10 remains between the outer sash 4 and the inner sash 3. The outer sash 4 and the inner sash 3 together define the light opening area 7.

Alternatively, the ventilation window 1 can be implemented without the intermediate space 10, in other words with one sash.

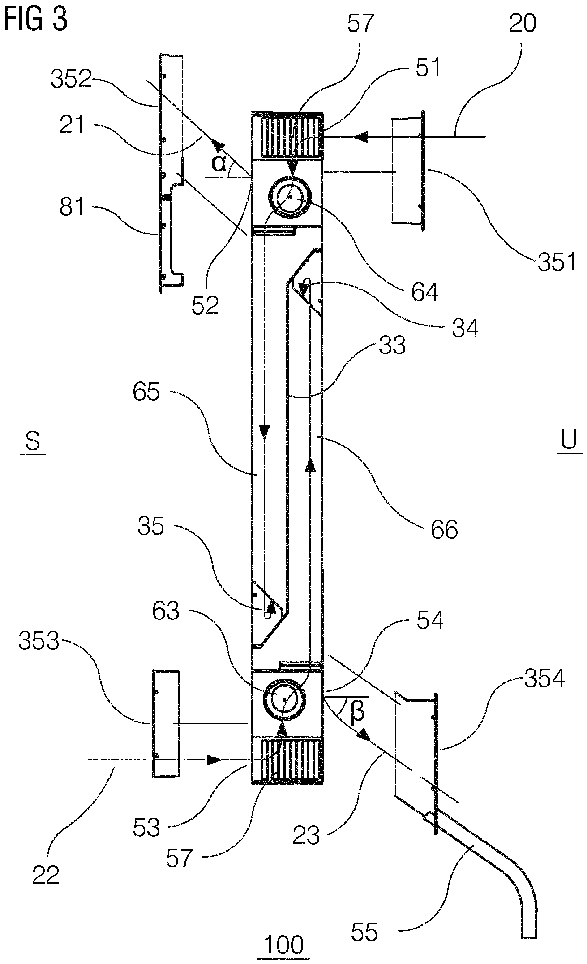

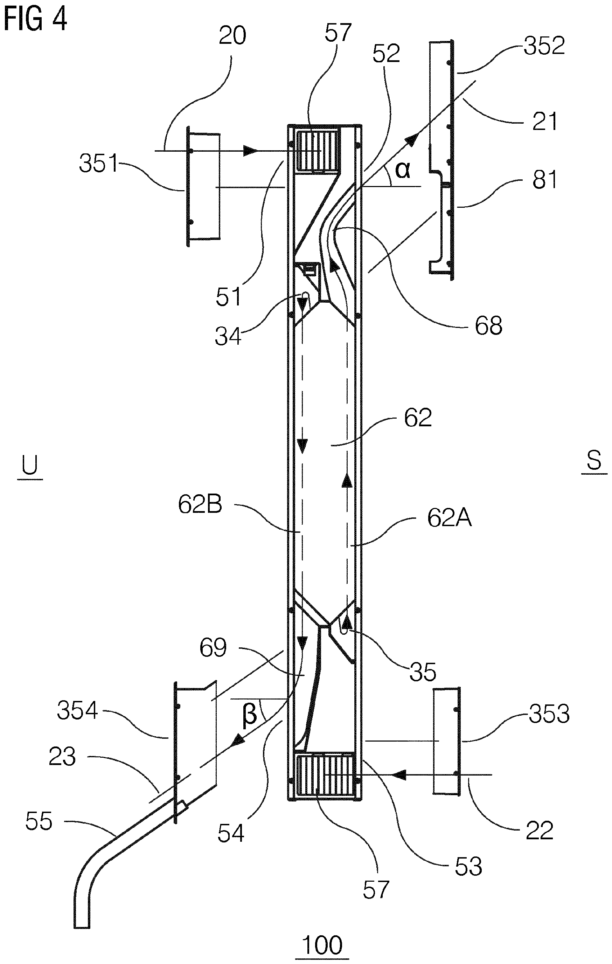

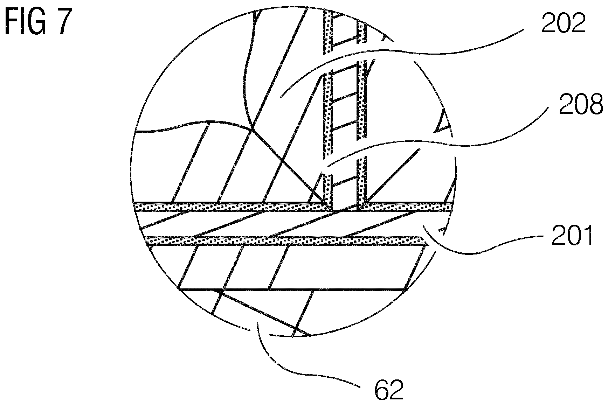

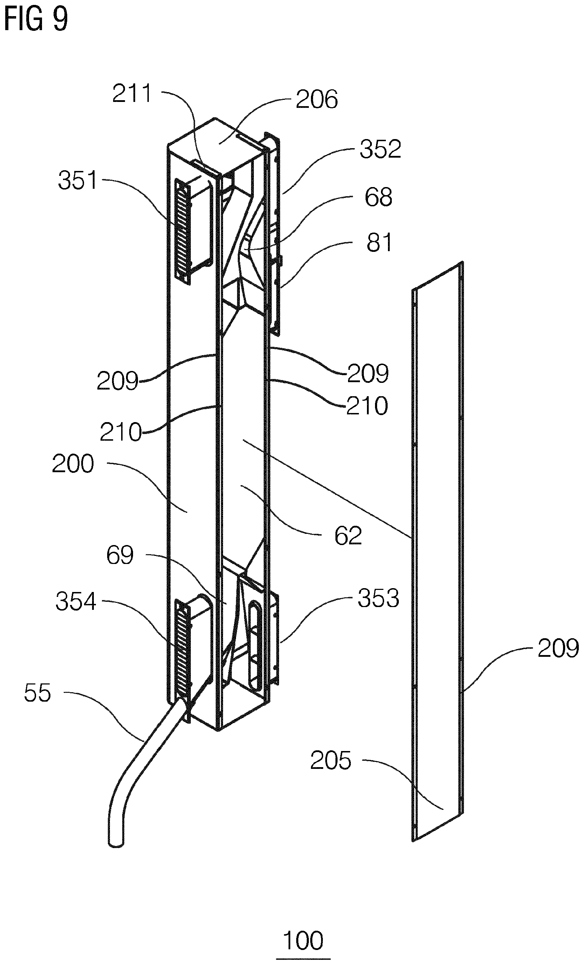

The structure and functioning of the ventilation device 100 are presented in more detail below in connection with FIG 3-10. The internal structure and functioning of the ventilation device 100 advantageously used in connection with the fresh air duct and exhaust air duct are disclosed in more detail in FIG 3 and 4.

The ventilation device 100 comprises at least one fresh air duct (pre-heating duct 65, fresh air duct 62A of counter flow heat exchanger, jet flow duct 68) which is in a flow connection between the exterior U and interior S and at least one exhaust air duct (suction duct 66, exhaust air duct 62B of counter flow heat exchanger, jet flow duct 69) which is in a flow connection between the interior S and exterior U, which fresh air duct and exhaust air duct run through a counter flow heat exchanger 62. The method of implementation of the fresh air duct and exhaust air duct in terms of the jet flow ducts can also be some other, in other words different from that presented here.

The ventilation device 100 further comprises air moving apparatuses (exhaust air blower 63, inlet air blower 64) in order accomplish an air flow both through the fresh air duct and through the exhaust air duct. The method of implementation of the air moving apparatuses can also be some other, in other words different from that presented here.

The ventilation device 100 is most advantageously elongated and used in the vertical position.

The ventilation device 100 sucks fresh air 20 from its upper part from the exterior U to the inlet 51 most advantageously through a nozzle 351, most advantageously by means of an electrically-operated inlet air blower 64 installed on the pressure side. When the inlet air blower 64 has been installed on the pressure side, it is more easily sealable. The inlet air blower 64 pushes the air flow into the pre-heating duct 65, which runs in accordance with FIG 3 most advantageously in the vertical direction from above downwards. After the pre-heating duct 65, the air flow changes the level and direction (cf. FIG 3) in the internal structure of the ventilation device 100, namely in accordance with FIG 4 into the fresh air duct 62A of the counter flow heat exchanger, after which the air flow continues into the jet flow duct 68, where the air flow converts at least partially, if not even completely, into a jet flow, to be released through the outlet 52 and a nozzle 352 most preferably located in connection with the outlet 52 as inlet air 21 most advantageously directed diagonally upwards.

Correspondingly, the ventilation device 100 sucks exhaust air 22 from its lower part from the interior S to the inlet 53 most advantageously through a nozzle 353, most advantageously by means of an electrically-operated exhaust air blower 63 installed on the pressure side. When the exhaust air blower 63 has been installed on the pressure side, it is more easily sealable. The exhaust air blower 63 pushes the air flow into the suction duct 66, which runs most advantageously in accordance with FIG 3 in the vertical direction from below upwards. After the suction duct 66, the air flow changes the level and direction (cf. FIG 3) in the internal structure of the ventilation device 100, namely in accordance with FIG 4 into the exhaust air duct 62B of the counter flow heat exchanger, after which the air flow continues into the jet flow duct 69, where the air flow converts at least partially, if not even completely, into a jet flow, to be released through the outlet 54 and a nozzle 354 most preferably located in connection with the outlet 52 as waste air 23 most advantageously directed diagonally downwards.

The jet flow duct 68 has most advantageously been arranged to turn the inlet air 21 from the horizontal level upwards. The drawings make reference to a trailing angle α of the inlet air 21, which trailing angle α is most advantageously 15-75° upwards from the horizontal level. The jet flow duct 69 has most advantageously been arranged to turn the waste air 23 from the horizontal level downwards. The drawings make reference to a trailing angle β of the waste air 23, which trailing angle β is most advantageously 15-75° downwards from the horizontal level.

By means of the arrangement presented here, in other words by means of the change of the level and direction of the suction duct 66 and of the pre-heating duct 65 before the corresponding ducts of the counter flow heat exchanger 62 (exhaust air duct 62B of the counter flow heat exchanger and fresh air duct 62A of the counter flow heat exchanger, respectively), it is possible to utilise the cross-sectional area of the ventilation device 100 better than in the ventilation devices described in the applicant's Finnish patent applications 20145578, 20145779, 20145780, 20145781, 20155844, 20155845, 20155846, 20155847, 20155848, 20155849, 20155850, which are still secret when this is being written, and in international patent applications PCT/IB2015/056399, PCT/IB2014/064294, PCT/IB2015/056400, PCT/IB2015/056401. This advantage is significant not only in that it enables the manufacture of a ventilation device with an especially compact cross-sectional area, but also in that when using the arrangement described here in a ventilation device described in said applications, due to the larger attainable cross-sectional area of the ducts, the pressure loss in the ducts of the ventilation device decreases, in which case: i) it is possible to decrease the flow velocity of the air flow in order to carry the same amount of air as with the ventilation devices described in the secret applications, ii) it is possible to increase the amount of air produced by the air flow in a unit of time using the same flow velocity as with the ventilation devices described in the secret applications. By means of the mode in accordance with aspect i), it is possible to decrease the operating sound of the ventilation device 100. By means of the mode in accordance with aspect ii), it is possible to improve the ventilation capacity of the ventilation device 100.

On the other hand, it is also possible to increase the energy efficiency of the ventilation device 100 when the pre-heating duct 65 and the suction duct 66 run side by side isolated by a separating wall 33. On the other hand, the functioning of the ventilation device 100 is very efficient also because the flow directions in the counter flow heat exchanger 62 run in a normal operating situation (where it is colder outdoors than indoors) in the direction of natural convection. In this case, also when the exhaust air 22 cools into waste air 23, it is possible to lead condensation water specifically in the flow direction after the counter flow heat exchanger 62 to the exterior U for example through an outlet tube 55 (which most advantageously has a defrosting arrangement, such as a trace heating cable 85).

The applicant has commissioned the re-design of the structure of the counter flow heat exchanger 62 so that it is possible to avoid the compensation of the crossing of the flow ducts, which took place in the counter flow heat exchanger (in other words the cross-wise layout of the flow ducts) and was needed in the ventilation device described in the applicant's secret applications, and to avoid the resulting reduction in the cross-sectional area of the flow ducts.

In the counter flow heat exchanger 62 described here, the inlets and outlets of the fresh air duct 62A of the counter flow heat exchanger and of the exhaust duct 62B of the counter flow heat exchanger are namely most advantageously located on a different level but still on the same side as the corresponding part of the flow duct respectively preceding the counter flow heat exchanger 62 in the flow direction (suction duct 66 in terms of the exhaust duct 62B of the counter flow heat exchanger and pre-heating duct 65 in terms of the fresh air duct 62A of the counter flow heat exchanger). In this way, it is sufficient that the air flow is just turned at a bend 34, 35 not only to the opposite vertical direction but also from one level to another, in which case the air flows going from the interior S to the exterior direction U and from the exterior U to the interior S direction only cross in the counter flow heat exchanger 62.

In other words: the fresh air duct and exhaust air duct have been arranged to run in the first vertical direction side by side without crossing each other, first in the first direction against each other and then after the bend 34, 35 in the opposite vertical direction still against each other, ending up in the counter flow heat exchanger 62. The inlet and outlet of the fresh air duct 62A of the counter flow heat exchanger and of the exhaust air duct 62B of the counter flow heat exchanger are at the opposite ends of the counter flow heat exchanger 62 mutually on the same side. In this way, the crossing of the fresh air duct and exhaust air duct with each other on the outside of the counter flow heat exchanger 62 is avoidable. In this way, it is possible to avoid that some of the cross-sectional area of the ventilation device 100 would be wasted for the crossing of the air ducts taking place on the outside of the counter flow heat exchanger 62.

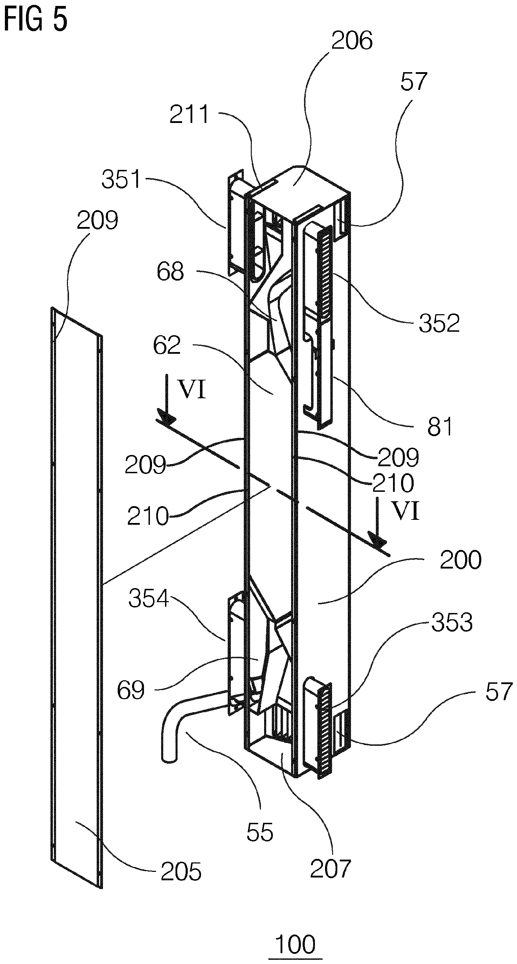

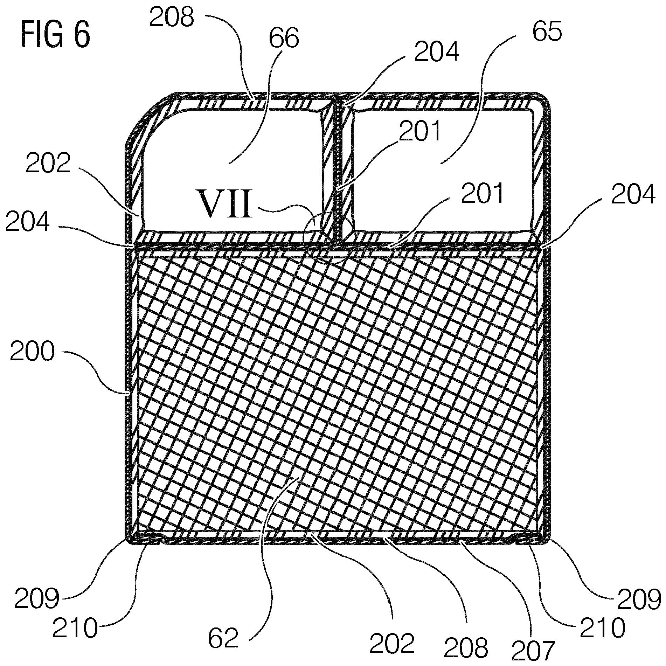

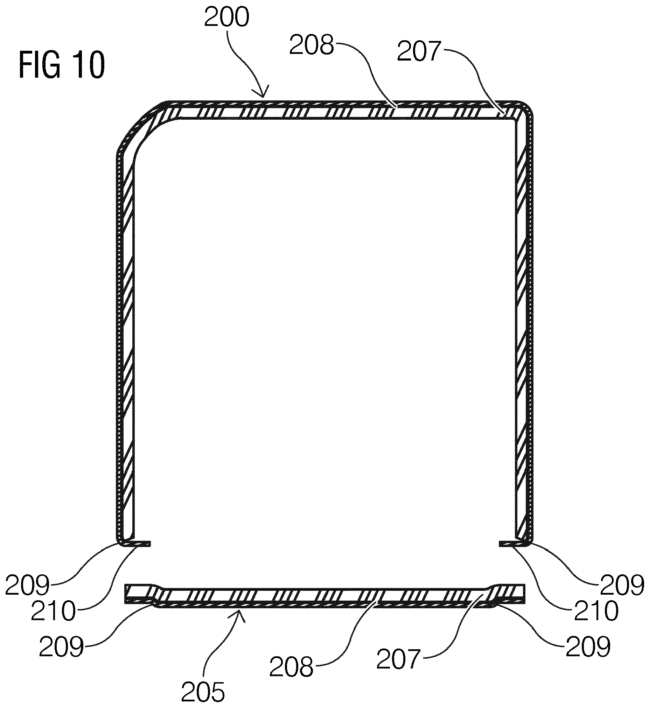

FIG 6 shows cross section VI-VI of the ventilation device 100 (cf. FIG 5). Casing 200 presented in FIG 10 seals the internal structure of the ventilation device 100, especially the ducts of the ventilation device 100, air tight in joint action with projections 204 and a rubber elastic layer 202, namely so that it is possible to prevent a stray flow between the pre-heating duct 65 and the suction duct 66, or it is at least possible to reduce the stray flow. On the other hand, the casing 200 also seals the internal structure of the ventilation device 100 air tight in joint action with the projections 204 and the rubber elastic layer 202 so that the travel of the air flow from the pre-heating duct 65 to the fresh air duct 62A of the counter flow heat exchanger and on the other hand also from the suction duct 66 to the exhaust air duct 62B of the counter flow heat exchanger is controlled, in other words so that it is possible to prevent the stray flow, or it is at least possible to reduce the stray flow.

The dimensions of the internal structure and casing 200 of the ventilation device 100 are most advantageously such that the internal structure or the projections of the internal structure compress the rubber elastic layer 202 against the casing 200. When the casing 200 is implemented most advantageously of metal, such as sheet metal 1 mm thick, the structure can be assembled by edging even from one sheet. The casing 200 can also be manufactured from some other material that guarantees sufficient stiffness, such as steel, aluminium and under certain conditions from glass, plastic or plastic composite, wood composite or even treated wood.

It is possible to arrange the casing 200 to be trough-shaped (for example in the shape of the letter C or U). Peaks 210 are most advantageously implemented at the edges of the trough, by means of which peaks 210 the cover 205 of the casing can be fastened. In this case, the cover 205 of the casing most advantageously comprises folds 209 made at the edges, which folds 209 are pushed in the assembly stage under the peaks 210 to close the casing 200.

On the inner surface of the casing 200 and on the inner surface of the cover 205 of the casing is a rubber elastic layer 202 most preferably everywhere but most advantageously at least at those internal structures that are used for air sealing. The rubber elastic layer 202 is most advantageously of expanded rubber, expanded plastic or other elastic material with sufficiently small thermal conductivity. Depending on the material, the material thickness used can be for example 3-10 mm.

Elastic materials with sufficient thermal insulating capacity are best suited for use as the rubber elastic layer 202. Sufficiently good heat insulation capacity material for example less than 0.1 W/mK. For example, the air permeability of expanded rubber is sufficiently small in order to form a sufficient air tightness, and rubber elasticity is sufficient for the air tightness accomplished with the compression joint. Moreover, the thermal conductivity of the material is sufficiently small. The advantages of expanded rubber also include the permanence of the rubber elasticity and minor permanent deformation. This feature is utilisable in re-assembly work following the disassembly of the ventilation device 100 required by possible maintenance work, in which case the air sealing surface does not necessarily settle into exactly the same point as during original installation. Alternatively, it is possible to use other materials with sufficient rubber elasticity, such expanded plastics or urethane-based materials. If the rubber elasticity is too small, the air tightness of the ventilation device 100 does not necessarily withstand the deformation of the sealing surface caused by mechanical forces resulting from temperature changes or handling throughout the planned lifetime of the device, but it also needs to be sealed with an elastic material.

The rubber elastic layer 202 is most advantageously sheet-like. The rubber elastic layer 202 can be fastened to the casing 200 and to the cover 205 of the casing for example by means of adhesive 208 or two-sided adhesive tape. In tests, we used an expanded rubber insulation that is fastened by adhesive and resembles adhesive tape, where the adhesive surface had been fastened in advance. There are possibly also better ways to fasten with the rubber elastic layer 202, such as spraying the layer onto the inner surface of the casing 200 and onto the inner surface of the cover 205 of the casing, the coating of the surfaces with a rubber elastic layer 202 as early as during the sheet working stage, or it is possible to manufacture items made from a rubber elastic material that are cut to shape and are well seated in terms of their shape.

The projections 204 penetrate into the rubber elastic layer 202 in order to implement air sealing. According to tests carried out by the applicant, a penetration depth of as small as for example 2 mm is sufficient for air sealing when the rubber elastic layer 202 used is an expanded rubber layer of 3 mm and the projections 204 protrude approx. 2 mm.

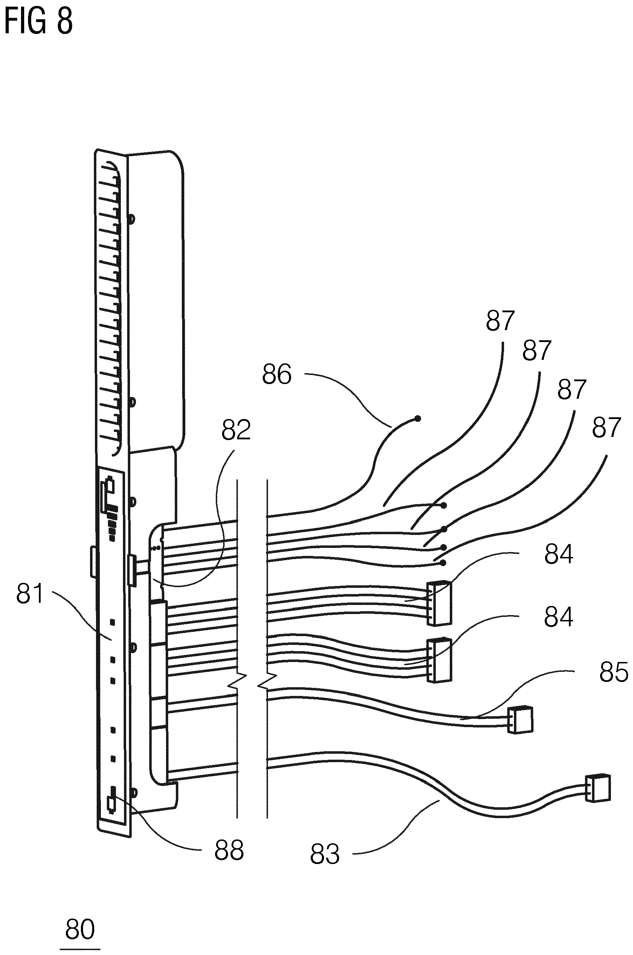

FIG 8 shows a perspective view of an electric system 80 most preferably belonging to the ventilation device 100 (the electric system 80 has been presented while removed from the ventilation device 100). The electric system 80 can also be implemented on the outside of the ventilation device 100.

The electric system 80 comprises a user interface/panel 81, circuit board 82, power supply and data cable 83, power cable 84 of the blower, trace heating cable 85, CO₂ sensor cable 86 and temperature sensor cable 87. The electric system 80 advantageously comprises a sound meter, for example a microphone 88, the signal of which is analysed by means of a logic on the circuit board 82. The air flow generated by the air moving apparatuses can be adjusted on the basis of the feedback of the internal or external sound meter.

The sensing system (for example microphone 88, CO₂ sensor with cable 86) can also be located on the outside of the ventilation device 100 just as long as the ventilation device 100 comprises in this case an information receiving arrangement for the receiving of information from the sensing system or its part.

In addition to this or as an alternative to this, the ventilation device 100 can be connected to an external sound meter, in which case the air flow generated by the air moving apparatuses can be adjusted on the basis of the feedback of the sound meter. The external sound meter can be implemented as an application of a smart telephone or in a house automation system.

The ventilation device 100 has most advantageously been configured to adjust the air flow generated by at least some air moving apparatuses on the basis of at least one measurable air quality parameter.

The ventilation device 100 has most advantageously been configured to increase or decrease the air flow generated by the air moving apparatuses between the initial value and target value in several steps in order to increase or decrease the time derivative of the operating sound of the air moving apparatuses or to increase or decrease the change in the operating sound per a unit of time. The steps have advantageously been defined experimentally, most advantageously on the basis of sound measurement.

The steps can be saved in a look-up table.

The magnitude of a step is most advantageously selected to be smaller than the change specified as the maximum permitted change in the sound pressure or sound power per a unit of time.

The air moving apparatuses can be controlled for example by modulating the electric power supplied to them for example by means of pulse width modulation. In this case, a step could correspond to the change in the pulse width.

The ventilation device 100 most preferably also comprises a bypass function to bypass the decrease or increase function taking place in several steps between the initial value and target value of the air flow. The bypass function can be settable and/or removable by means of a switch, such as a push button, clock control, timer control or a combination of these. In addition to this or as an alternative to this, the switch can be controllable by means of an application of a smart telephone or by means of a house automation system.

The bypass function for the increase or decrease of the air flow taking place in several steps can be switched on and/or off on the basis of sensor control. The sensor control can comprise at least one presence sensor and/or at least one infrared sensor. In addition to this or as an alternative to this, the sensor control information can be obtained from a house automation system.

In an advantageous embodiment, the air moving apparatuses of the ventilation device 100 are at least one inlet air blower 64 for the fresh air duct and at least one exhaust air blower 63 for the exhaust air duct. In this case, the inlet air blower 64 and the exhaust air blower 63 are each most preferably run so that they produce from the fresh air duct a volume flow that is equal to, smaller than or greater than from the exhaust air duct so that the interior S does not become pressurised, underpressurised or overpressurised with respect to the exterior U. Instead of an individual ventilation device 100, corresponding control can be implemented by means ventilation devices 100 of a decentralised ventilation system.

In this case, the inlet air blower 64 and the exhaust air blower 63 are most advantageously rotated with respect to each other at the same or a different speed. In this case, the steps have most preferably been selected so that the intensity of the sound frequency caused by the respective speed of rotation of each blower 63, 64 and by the difference in the rotation of the blowers 63, 64 as well as the harmonic multiples of this intensity are kept smaller than the pre-determined level, it is possible to best avoid a rapid change in the intensity of the sound frequency and/or the emergence of sudden buzzing or whirring caused by different speeds of rotation, which possibly disturb the quality of sleep especially much.

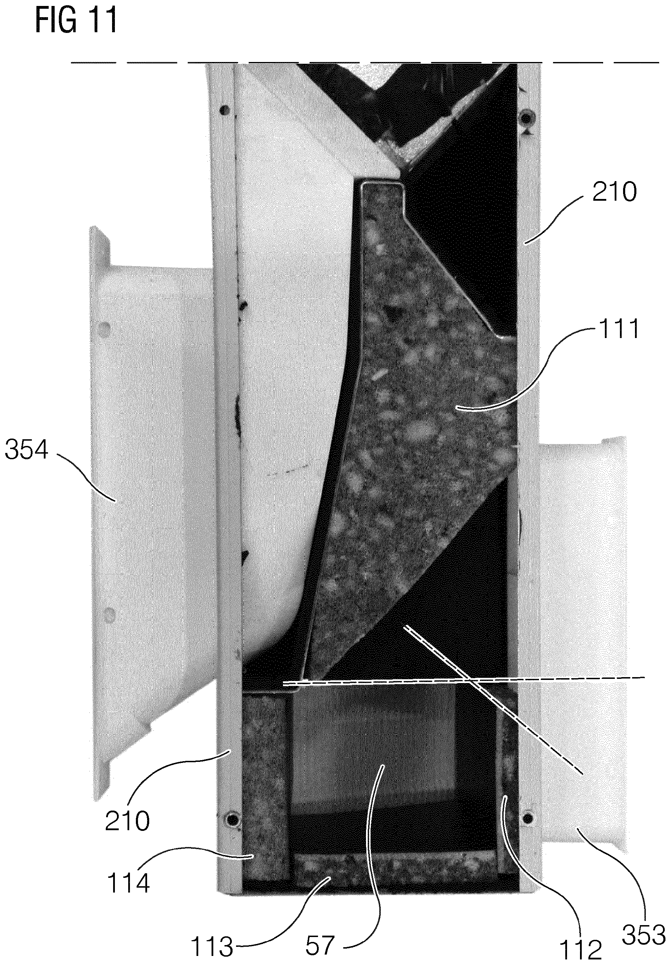

FIG 11 shows a cross section of the ventilation device 100 at the inlet 53 of the exhaust air duct. The nozzle 353 is in place. FIG 11 shows sound-insulated ducts made from recycled foam sheet in the lower end of the ventilation device 100.

Pieces of different thicknesses cut to shape from recycled foam sheet have been glued to the walls of the flow duct located at the beginning of the suction duct to serve as damping sheets 111, 112, 113, 114 so that sound can be dampened as well as possible without essentially impairing the air flow. The damping sheet 112 has been installed so that the upper edge of the damping sheet 112 is on the level of the upper edge of the filter 57 or higher. In this case, the damping sheet 112 essentially covers the filter 57 location, for example in connection with the ventilation device 100 described here almost half of the inlet 53 opening of the exhaust air duct. The structure works as a sound trap for the operating sound of the exhaust air blower 63 of the ventilation device 100: the exhaust air blower 63 located in the flow direction after the filter 57 sucks exhaust air 22 through a nozzle 353. In practice, the exhaust air 22 flows from above the damping sheet 112 past the damping sheet 112 and through the filter 57 located beneath the upper edge of the damping sheet 112. After the filter 57, the exhaust air blower 63 pushes the air flow into the suction duct 66 (see FIG 3). The operating sound of the exhaust air blower 63 comes through the filter 57 and is first directed at the damping sheet 112, which has a considerable impact on the sound level of the ventilation device 100. On the other hand, there is an opening in the casing 200 of the ventilation device 100 at the damping sheet 112, which opening reduces the resonance of sound in the casing 200.

The sound carried through the filter 57 is also dampened by a damping sheet 114 extending to the height of the distance of the filter 57.

A corresponding arrangement can also be used in connection with the inlet 51 of fresh air 20 of the ventilation device 100. However, the noise heard on the exterior U side is not necessarily as critical as the noise heard on the interior S side.

The ventilation window 1 comprises a frame 2 and at least one sash (such as an inner sash 3 and outer sash 4, between which remains an intermediate space 10), which determines the light opening area 7, at least one pane 5, 6 fastened to the sash, as well as the ventilation device 100 installed in the vertical frame.

Advantageously, the discharge point of the jet flow duct 68 of the fresh air duct is in the upper part of the ventilation window 1 and/or the discharge point of the jet flow duct 69 of the exhaust air duct is in the lower part of the ventilation window 1.

The invention should not be understood to be limited only by the below claims, but the invention is to be understood to include all their legal equivalents and the combinations of the embodiments presented.

### List of reference numbers used:

- U: exterior
- S: interior
- 1: ventilation window
- 2: frame
- 3: inner sash
- 4: outer sash
- 5: pane
- 6: pane
- 7: light opening area
- 8: outer sash hinge
- 9: frame lining
- 10: intermediate space
- 20: fresh air
- 21: inlet air
- 22: exhaust air
- 23: waste air
- 33: separating wall
- 34: bend
- 35: bend
- 51: inlet
- 52: outlet
- 53: inlet
- 54: outlet
- 55: outlet tube
- 57: filter
- 62: counter flow heat exchanger
- 62A: fresh air duct of counter flow heat exchanger
- 62B: exhaust air duct of counter flow heat exchanger
- 63: exhaust air blower
- 64: inlet air blower
- 65: pre-heating duct
- 66: suction duct
- 68: jet flow duct
- 69: jet flow duct
- 80: electric system
- 81: user interface/panel
- 82: circuit board
- 83: power supply and data cable
- 84: power cable of blower
- 85: trace heating cable
- 86: CO₂ sensor cable
- 87: temperature sensor cable
- 88: microphone
- 100: ventilation device
- 111: damping sheet
- 112: damping sheet
- 113: damping sheet
- 114: damping sheet
- 200: casing
- 201: sheet metal
- 202: rubber elastic layer
- 203: interior
- 204: projection
- 205: cover of casing
- 206: ceiling
- 207: bottom
- 208: adhesive
- 209: fold
- 210: peak
- 211: shoulder
- 351: nozzle
- 352: nozzle
- 353: nozzle
- 354: nozzle

## Claims

1. A ventilation device (100), **characterised in that**:
The ventilation device (100) comprises at least one fresh air duct (65, 62A, 68) which is in a flow connection between the exterior (U) and interior (S) and at least one exhaust air duct (66, 62B, 69) which is in a flow connection between the interior (S) and exterior (U), which fresh air duct (65, 62A, 68) and exhaust air duct (66, 62B, 69) run through a counter flow heat exchanger (62).
In addition to this, the ventilation device (100) comprises air moving apparatuses (63, 64) - such as at least one blower - in order accomplish an air flow both through the fresh air duct (65, 62A, 68) and through the exhaust air duct (66, 62B, 69).
In the ventilation device (100):
i) the fresh air duct (65, 62A, 68) comprises a jet flow duct (68) for converting the air flow travelling in the fresh air duct (65, 62A, 68) into a jet flow, the trailing angle (α) of the inlet air (21) of which jet flow duct (68) has been tilted upwards from the horizontal level;
and
ii) the exhaust air duct (66, 62B, 69) comprises a jet flow duct (69) for converting the air flow travelling in the exhaust air duct (66, 62B, 69) into a jet flow, the trailing angle (β) of the waste air (23) of which jet flow duct (69) has been tilted downwards from the horizontal level.

2. A ventilation device (100) according to claim 1, **which ventilation device (100) is:** elongated and used in the vertical position and **where:** the discharge point of the jet flow duct (68) of the fresh air duct (65, 62A, 68) is located in the upper part of the ventilation device (100).

3. A ventilation device (100) according to claim 1 or 2, **where:** the trailing angle (α) of the inlet air of the jet flow duct (68) of the fresh air duct (65, 62A, 68) is between 15°-75° upwards from the horizontal level.

4. A ventilation device (100) according to any one of the preceding claims, **where:** the fresh air duct (65, 62A, 68) comprises an elongated pre-heating duct (65), which runs in the flow direction from above downwards.

5. A ventilation device (100) according to any one of the claims 1-4, **which ventilation device (100) is** elongated and used in the vertical position and where: the discharge point of the jet flow duct (69) of the exhaust air duct (66, 62B, 69) is located in the lower part of the ventilation device (100).

6. A ventilation device (100) according to any one of the preceding claims, **where:** the trailing angle (β) of the waste air (23) of the jet flow duct (69) of the exhaust air duct (66, 62B, 69) is between 15°-75° downwards from the horizontal level.

7. A ventilation device (100) according to any one of the preceding claims 5-6, **where:** the exhaust air duct (66, 62B, 69) comprises an elongated suction duct (66), which runs in the flow direction from below upwards.

8. A ventilation device (100) according to any one of the preceding claims, where the heat exchanger (62) is a counter flow heat exchanger.

9. A ventilation window (1), **which comprises:** a frame (2) and at least one sash (3, 4), which determines the light opening area (7), and at least one pane (5, 6) fastened to the sash (3, 4), as well as the ventilation device (100) according to any one of the preceding claims, installed in the vertical frame (3).

10. A ventilation window (1) according to claim 9, **where:**
i) the discharge point of the jet flow duct (68) of the fresh air duct (65, 62A, 68) is in the upper part of the ventilation window (1);
and
ii) the discharge point of the jet flow duct (69) of the exhaust air duct (66, 62B, 69) is in the lower part of the ventilation window (1).

11. A method for the reduction of the sensation of draught in the vicinity of the ventilation device (100) - which can especially be installed in the ventilation window (1) - **in which method:** the inlet air (21) of the air flow run from the exterior (U) side into the interior (S) through the heat exchanger (62) - which is most preferably a counter flow heat exchanger - is run into the interior (S) as a jet flow so that the trailing angle (α) of the inlet air (21) has been tilted upwards from the horizontal level.

12. A method for the reduction of frosting of the outermost pane (6) of the ventilation window (1) that comprises the ventilation device (100), **in which method:** the waste air (23) of the air flow run from the interior (S) side to the exterior (U) through the heat exchanger - which is most preferably a counter flow heat exchanger - is run to the exterior (U) as a jet flow so that the trailing angle (β) of the waste air (23) has been tilted downwards from the horizontal level.
